# EUROPEAN PATENT APPLICATION

(11) **EP 4 826 796 A1**
(43) Date of publication of application: **21.10.2026**
(21) Application number: 25867321.9
(22) Date of filing: 07.11.2025
(51) Int. Cl.: H01M 4/58, H01M 10/0525, H01M 4/136, C01B 25/45

(54) **LITHIUM IRON PHOSPHATE MATERIAL AND PREPARATION METHOD THEREFOR, POSITIVE ELECTRODE SHEET, AND SECONDARY BATTERY**

(30) Priority: 28.02.2025 CN 202510228499
(71) Applicant: Guangdong Brunp Recycling Technology Co., Ltd., Foshan, Guangdong 528137 (CN)
(72) Inventor: YU, Haijun, Foshan, Guangdong 528137 (CN); CHEN, Fangyuan, Foshan, Guangdong 528137 (CN); HUANG, Weiyan, Foshan, Guangdong 528137 (CN); WANG, Tao, Foshan, Guangdong 528137 (CN); LI, Changdong, Foshan, Guangdong 528137 (CN)
(74) Representative: Westphal, Mussgnug & Partner, Patentanwälte mbB
(86) International application number: PCT/CN2025/133389
(87) International publication number: WO 2026/179227

(57) **Abstract**

The present disclosure provides a lithium iron phosphate material, a preparation method therefor, a cathode sheet, and a secondary battery, and relates to the field of cathode materials. The lithium iron phosphate material in the present disclosure satisfies 1.10 ≤ σ_{b}/σ_{f} ≤ 5.00, wherein σ_{b} is a sample standard deviation of circularity C of large lithium iron phosphate particles, and σ_{f} is a sample standard deviation of circularity C of small lithium iron phosphate particles. By controlling a difference in the sample standard deviation of circularity between large and small lithium iron phosphate particles, the large and small lithium iron phosphate particles with different morphologies cooperate with each other, enabling the lithium iron phosphate material to achieve both good tap density and specific surface area. According to the method for preparing the lithium iron phosphate material in the present disclosure, polydopamine-partially-coated large-particle-sized iron phosphate seed crystal is subjected to vacuum dehydration to obtain a surface-dehydrated modified iron phosphate seed crystal, which is used for controlling the morphology of large iron phosphate particles in subsequent precipitation reaction. Subsequently, through a co-precipitation method and subsequent treatments, a lithium iron phosphate material with good tap density and specific surface area is ultimately prepared.

## Description

### TECHNICAL FIELD

The present disclosure relates to the field of cathode materials, and in particular to a lithium iron phosphate material, a preparation method therefor, a cathode sheet, and a secondary battery.

### BACKGROUND

As a type of cathode material for a secondary battery, lithium iron phosphate (LiFePO₄) with an olivine structure features, e.g., abundant raw material availability, low price, good thermal stability, environmental friendliness, and stable discharge platform, making it one of the most potential cathode materials.

However, the relatively low tap density and low actual specific capacity of the lithium iron phosphate material have, to some extent, limited its development. The tap density of the lithium iron phosphate material is closely correlated with particle size of its constituent particles. If powder composed of the particles has an ideal particle size distribution, allowing smaller particles to fill voids among large particles as much as possible, its tap density can be further improved, thereby contributing to enhancement of volumetric specific capacity of the secondary battery.

In the existing technology, the tap density of the lithium iron phosphate material is usually improved by using a combination of large and small particles grading. However, since lithium ions in the lithium iron phosphate material diffuse mainly along one-dimensional directions, resulting in slow lithium-ion transport within the material, even a combination of particles grading still struggles to effectively alleviate the problem of reduced rate performance caused by the slow ion transport rate in the lithium iron phosphate material.

In view of the above, the present disclosure is presented.

### SUMMARY

An objective of the present disclosure is to provide a lithium iron phosphate material, a preparation method therefor, a cathode sheet, and a secondary battery. The lithium iron phosphate material features in a bimodal distribution in a particle size distribution curve, and standard deviation of circularity of large lithium iron phosphate particles is larger than that of small lithium iron phosphate particles. The cooperation of large and small lithium iron phosphate particles with different morphologies enables the lithium iron phosphate material to achieve both good tap density and specific surface area, thereby delivering superior specific capacity and rate performance.

In order to achieve the above objective, according to a first aspect of the present disclosure, a lithium iron phosphate material is provided. The lithium iron phosphate material has a bimodal distribution in the particle size distribution curve, the particle size distribution curve sequentially comprises a first peak and a second peak along a positive direction of an abscissa, wherein particle sizes represented by the first peak and the second peak are denoted as D_{f} and D_{b}, respectively, in µm; and volume percentages are denoted as V_{f} and V_{b}, respectively.

The lithium iron phosphate material satisfies 1.10 ≤ σ_{b}/σ_{f} ≤ 5.00, where σ_{b} is a sample standard deviation of circularity C of the large lithium iron phosphate particles, and σ_{f} is a sample standard deviation of circularity C of the small lithium iron phosphate particles. The circularity C=(4×π×A)/P², where A is a projected area of the lithium iron phosphate particles, and P is a perimeter of the projected area.

The large lithium iron phosphate particles are defined as those having a projected area larger than or equal to Sₘₐₓ = 1/4×π×D_{b}², and the small lithium iron phosphate particles are defined as those having a projected area smaller than or equal to Sₘᵢₙ = 1/4×π×D_{f}².

In some embodiments, the lithium iron phosphate material satisfies at least one of the following features 1 and 2:
feature 1: the σ_{b} satisfies 0.05 ≤ σ_{b} ≤ 0.15; or
feature 2: the σ_{f} satisfies 0.02 ≤ σ_{f} ≤ 0.09.

In some embodiments, the lithium iron phosphate material satisfies at least one of the following features a-d:
feature a: 0.3 µm ≤ D_{f} ≤ 1.0 µm and 1.2 µm ≤ D_{b} ≤ 10 µm;
feature b: 3% ≤ V_{f} ≤ 10% and 3% ≤ V_{b} ≤ 10%;
feature c: 0.2 ≤ V_{b}/V_{f} ≤ 2.5; or
feature d: 2.5 ≤ D_{b}/D_{f} ≤ 12.

In some embodiments, the lithium iron phosphate material satisfies: $2 \leq \frac{{D}_{b}}{{D}_{f}} / \frac{{V}_{b}}{{V}_{f}} \times span \times \frac{{σ}_{b}}{{σ}_{f}} \leq 70$, wherein span satisfies 1.5 ≤ span ≤ 5, the span is calculated as span = (Dv90-Dv10)/Dv50, and the Dv90, Dv50, and Dv10 are the particle sizes corresponding to cumulative volume percentages of 90%, 50%, and 10% of the lithium iron phosphate material, respectively, all in µm.

According to a second aspect of the present disclosure, a method for preparing the lithium iron phosphate material according to the first aspect is provided, the method comprises the following steps:
coating a large-particle-sized iron phosphate seed crystal with polydopamine to obtain a polydopamine-partially-coated large-particle-sized iron phosphate seed crystal;
subjecting the polydopamine-partially-coated large-particle-sized iron phosphate seed crystal to vacuum dehydration to obtain a modified iron phosphate seed crystal;
mixing the modified iron phosphate seed crystal with a small-particle-sized iron phosphate seed crystal, adding an iron salt and a phosphorus source to a resulting mixture to allow precipitation reaction in water, to obtain an iron phosphate material; and
subjecting the iron phosphate material, a lithium source, and a carbon source to mixing and calcining successively, to obtain the lithium iron phosphate material.

In some embodiments, a method for obtaining the polydopamine-partially-coated large-particle-sized iron phosphate seed crystal includes the following steps: mixing and dispersing the large-particle-sized iron phosphate seed crystal and a surfactant in a dopamine hydrochloride-containing Tris-HCl buffer solution, stirring for reaction, followed by filtering, washing and drying to obtain the polydopamine-partially-coated large-particle-sized iron phosphate seed crystal.

In some embodiments, the method for obtaining the polydopamine-partially-coated large-particle-sized iron phosphate seed crystal includes at least one of the following features i-vi:
feature i: the surfactant is an anionic surfactant with a concentration of 0.1-3 g/L in the Tris-HCl buffer solution;
feature ii: a mass ratio of the large-particle-sized iron phosphate seed crystal to the surfactant is 50: 1-5;
feature iii: the large-particle-sized iron phosphate seed crystal has a particle size of 400-1,500 nm;
feature iv: the Tris-HCl buffer solution has a pH valve of 8-8.5;
feature v: the dopamine hydrochloride has a concentration of 0.1-0.3 mg/mL in the Tris-HCl buffer solution; or
feature vi: the stirring for reaction is conducted at a stirring rate of 500-1,000 rpm for 20-30 h.

In some embodiments, the method for obtaining the lithium iron phosphate material comprises at least one of the following features A-G:
feature A: the vacuum dehydration is conducted at a temperature of 160-190°C for 1-1.5 h;
feature B: the small-particle-sized iron phosphate seed crystal has a particle size of 200-600 nm;
feature C: a volume ratio of the modified iron phosphate seed crystal to the small-particle-sized iron phosphate seed crystal is 0.9-1.5: 1;
feature D: a ratio of a total volume of the modified iron phosphate seed crystal and the small-particle-sized iron phosphate seed crystal to a volume of the water is 1: 4-12;
feature E: the iron salt has a concentration of 0.5-1.2 mol/L in the water;
feature F: a molar ratio of iron element in the iron salt to phosphorus element in the phosphorus source is 1: 1-1.5; or
feature G: the precipitation reaction is conducted at a stirring rate of 350-750 rpm.

According to a third aspect of the present disclosure, a cathode sheet is provided, wherein the cathode sheet comprises the lithium iron phosphate material provided in the first aspect of the present disclosure or the lithium iron phosphate material prepared by the preparation method provided in the second aspect of the present disclosure.

According to a fourth aspect of the present disclosure, a secondary battery is provided, wherein the secondary battery includes the cathode sheet provided in the third aspect.

The present disclosure has the following beneficial effects.

The lithium iron phosphate material provided in the present disclosure satisfies 1.10 ≤ σ_{b}/σ_{f}≤ 5.00, where σ_{b} is a sample standard deviation of circularity C of large lithium iron phosphate particles, and σ_{f} is a sample standard deviation of circularity C of small lithium iron phosphate particles. By controlling a difference in the sample standard deviation of circularity between large and small lithium iron phosphate material particles, the large and small lithium iron phosphate particles with different morphologies cooperate with each other, enabling the lithium iron phosphate material to achieve both good tap density and specific surface area.

According to the method for preparing a lithium iron phosphate material provided in the present disclosure, the polydopamine-partially-coated large-particle-sized iron phosphate seed crystal is vacuum-dehydrated to obtain a surface-dehydrated modified iron phosphate seed crystal, so as to control the morphology of large particles of iron phosphate in subsequent precipitation reaction, and then large and small seed crystals are co-precipitated to form an iron phosphate material, thereby finally obtaining a lithium iron phosphate material having good tap density and specific surface area.

### BRIEF DESCRIPTION OF THE DRAWINGS

In order to more clearly illustrate technical solutions of embodiments of the present disclosure, drawings involved in the embodiments will be briefly described below. It should be understood that the drawings below only show some embodiments of the present disclosure, and therefore should not be regarded as limiting the scope of protection of the present disclosure. For those of ordinary skills in the art, other relevant drawings may also be obtained based on these drawings without creative work.
FIG. 1 is an SEM image of a lithium iron phosphate material in Example 1 of the present disclosure;
FIG. 2 is an SEM image of a lithium iron phosphate material in Comparative Example 2 of the present disclosure; and
FIG. 3 shows particle size distribution curves of lithium iron phosphate materials in Examples 4-5 of the present disclosure.

### DETAILED DESCRIPTION

The following describes in detail a lithium iron phosphate material, a preparation method thereof, a cathode sheet and a secondary battery of the present disclosure with reference to the accompanying drawings. For the technical features well-known in the technical field to which the present disclosure pertains and the technical features with actually repeated structures, detailed description thereof will be omitted to avoid unnecessary verbosity and facilitate the understanding and implementation by those skilled in the art. In addition, the accompanying drawings and the following description are provided for those skilled in the art to fully understand the present disclosure, and are not intended to limit the protection scope claimed in the claims.

The "range" described in the present disclosure is defined in the form of a lower limit and an upper limit, that is, a given range is defined by using a lower limit and an upper limit, and the used lower limit and upper limit form the boundaries of the range respectively. In particular, the symbols "(", ")", "[" and "]" denote intervals, where "(" or ")" denotes an open interval (i.e., the endpoint values of the interval are not included); "[" and "]" denote a closed interval (i.e., the endpoint values of the interval are included). A range defined in this manner may either include or exclude the endpoint values, and any combination thereof is permissible, i.e., any lower limit may be combined with any upper limit to form a different range.

Specifically, for example, if ranges of 60-120 and 80-110 are listed for a specific parameter, it should be understood that ranges of 60-110 and 80-120 are also contemplated. In addition, if the minimum range values 1 and 2 are listed and the maximum range values 3, 4 and 5 are listed, the following ranges are also all contemplated: 1-3, 1-4, 1-5, 2-3, 2-4 and 2-5. In the present disclosure, unless otherwise specified, the numerical range "a-b" is an abbreviated representation of any combination of real numbers between a and b, where both a and b are integers. For example, the numerical range "0-5" means that all integers between "0-5" have been fully listed herein, and "0-5" is merely an abbreviated representation of these numerical combinations. In addition, if a parameter is defined as "an integer ≥ 2", it is equivalent to disclosing that the parameter is, for example, 2, 3, 4, 5, 6, 7, 8, 9, 10, 11, 12 and the like. If the interval "(10, 20)" is listed, it should be understood that 10 and 20 are not included, but any value within the range of 10-20 is included; if the interval "(10,20]" is listed, it should be understood that 10 is not included, but 20 and any value within the range of 10-20 are included.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps of the present disclosure may be performed in sequence or randomly. In some embodiments, all steps of the present disclosure are performed in sequence. For example, the method including steps (a) and (b) means that the method may include steps (a) and (b) performed in sequence, or may include steps (b) and (a) performed out of sequence. For example, the method further including step (c) means that step (c) may be added to the method in any order. For example, the method may comprise steps (a), (b) and (c), or steps (a), (c) and (b), or steps (c), (a) and (b), and so on.

Unless otherwise specified, the terms "comprise" and "include" used in the present disclosure may be open-ended or closed-ended. For example, the terms "comprise" and "include" may mean that other components not listed may also be comprised or included, or only the listed components may be comprised or included.

Unless otherwise specified, the term "or" used in the present disclosure is inclusive. For example, the phrase "A or B" means "A, B, or both A and B". More specifically, the condition "A or B" is satisfied if any of the following conditions is met: A is true (or present) and B is false (or absent); A is false (or absent) and B is true (or present); or both A and B are true (or present).

A lithium iron phosphate material inherently exhibits low ion transport rate. Particle nanonization is an effective strategy to improve the lithium-ion transport rate. However, while particle nanonization shortens the transport path to improve rate performance, it also leads to decreased energy density due to low tap density. Therefore, a combination of large and small particles grading is often used in this field to utilize the packing effect between large and small particles to improve the tap density of the material. However, since large particles have a small specific surface area and a long ion diffusion path, although a combination of large and small particles grading can improve the tap density of the material, it reduces the specific surface area of the material, thereby providing no significant improvement in the rate performance of the material.

In a first aspect, the present disclosure provides a lithium iron phosphate material. The lithium iron phosphate material has a bimodal distribution in a particle size distribution curve, and the particle size distribution curve sequentially comprises a first peak and a second peak along a positive direction of an abscissa, wherein particle sizes represented by the first peak and the second peak are denoted as D_{f} and D_{b}, respectively, in µm; and volume percentages are denoted as V_{f} and V_{b}, respectively.

The lithium iron phosphate material satisfies 1.10 ≤ σ_{b}/σ_{f} ≤ 5.00, where σ_{b} is a sample standard deviation of circularity C of the large lithium iron phosphate particles, and σ_{f} is a sample standard deviation of circularity C of the small lithium iron phosphate particles. The circularity C=(4×π×A)/P², where A is a projected area of the lithium iron phosphate particles, and P is a perimeter of the projected area.

The large lithium iron phosphate particles are defined as those having a projected area larger than or equal to Sₘₐₓ = 1/4×π×D_{b}², and the small lithium iron phosphate particles are defined as those having a projected area smaller than or equal to Sₘᵢₙ = 1/4×π×D_{f}².

In order to solve the problem that the combination of large and small particles grading can improve the tap density, but will reduce the specific surface area of the lithium iron phosphate cathode material, the present disclosure provides a lithium iron phosphate material with a standard deviation of sphericity of the large lithium iron phosphate particles greater than that of the small lithium iron phosphate particles and featuring good tap density and specific surface area.

Circularity C of a projected area of lithium iron phosphate particles can reflect sphericity of the lithium iron phosphate particles. The closer the C is to 1, the better the sphericity of the particles is. The σ_{b} represents the sample standard deviation of the circularity C of the large lithium iron phosphate particles, and the σ_{f} represents the sample standard deviation of the circularity C of the small lithium iron phosphate particles. The larger the sample standard deviation is, the higher the degree of dispersion of the circularity C is, which manifests as a greater difference in the sphericity of the particles. Conversely, the smaller the sample standard deviation is, the lower the degree of dispersion of the circularity C is, which manifests as a smaller difference in the sphericity of the particles. The lithium iron phosphate material in the present disclosure satisfies 1.10 ≤ σ_{b}/σ_{f} ≤ 5.00 (σ_{b}/σ_{f} may be 1.10, 1.15, 1.20, 1.25, 1.30, 1.35, 1.40, 1.45, 1.50, 2.5, 3.0, 3.5, 4.0, 4.5, 5.0, or any value in the range of 1.10-5.00). The lithium iron phosphate material within this range features good tap density and specific surface area.

In some embodiments, the σ_{b} of the lithium iron phosphate material satisfies 0.05 ≤ σ_{b} ≤ 0.15 (σ_{b} may be 0.05, 0.075, 0.08, 0.085, 0.09, 0.095, 0.10, 0.11, 0.12, 0.13, 0.14, 0.15, or any value in the range of 0.05-0.15).

In some embodiments, the σ_{f} of the lithium iron phosphate material satisfies 0.02 ≤ σ_{f} ≤ 0.09 (σ_{f} may be 0.02, 0.03, 0.04, 0.05, 0.06, 0.07, 0.08, 0.09, or any value in the range of 0.02-0.09).

Since standard spherical particles with the same volume have the smallest surface area, the sphericity of the lithium iron phosphate material has an important impact on its specific surface area and tap density, and finally affects its electrochemical performance. Specifically, higher sphericity results in a smaller specific surface area of the lithium iron phosphate material, which reduces a contact area between the material and the electrolyte, thereby lowering lithium ion transport efficiency. Conversely, lower sphericity leads to a lower tap density of the lithium iron phosphate material, ultimately resulting in decreased volumetric energy density. Generally, the lithium iron phosphate particles have relatively uniform sphericity, which is conducive to improving the tap density of the material and reducing its internal resistance. However, higher sphericity results in a smaller particle surface area, which is therefore unfavorable for improving the specific surface area.

The present disclosure provides a lithium iron phosphate material with a bimodal distribution in the particle size distribution curve, thereby distinguishing large lithium iron phosphate particles from small lithium iron phosphate particles in the lithium iron phosphate material, wherein the large lithium iron phosphate particles have a large standard deviation of circularity (σ_{b}), while the small lithium iron phosphate particles have a small standard deviation of circularity (σ_{f}).

Excessively high or low sphericity uniformity of the large lithium iron phosphate particles is not conducive to the improvement of the overall performance of the lithium iron phosphate material. Specifically, when the large lithium iron phosphate particles have too large sphericity difference, some of the particles may exhibit excessively low sphericity, resulting in larger interstitial pores formed by interparticle bridging, thereby reducing the tap density of the material. Conversely, when the large lithium iron phosphate particles have too small sphericity difference, they may all exhibit a high sphericity, a low sphericity, or an additional equivalent sphericity. When they all exhibit a high sphericity, the material has a small total specific surface area; when they all exhibit a low sphericity, the material has a low tap density; and when they all exhibit an additional equivalent sphericity, the material can hardly balance good tap density and specific surface area.

The small lithium iron phosphate particles can fill the voids among the large lithium iron phosphate particles, thus functioning to improve the tap density. Particularly, when the small lithium iron phosphate particles satisfy 0.02 ≤ σ_{f} ≤ 0.09, they can effectively fill the voids among the large lithium iron phosphate particles, significantly improving the tap density of the lithium iron phosphate material.

In some embodiments, the lithium iron phosphate material satisfies 0.3 µm ≤ D_{f} ≤1.0 µm and 1.2 µm ≤ D_{b} ≤ 10 µm (where D_{f} may be 0.3 µm, 0.4 µm, 0.5 µm, 0.6 µm, 0.7 µm, 0.8 µm, 0.9 µm, 1.0 µm, or any value in the range of 0.3-1.0 µm; and D_{b} may be 1.2 µm, 2 µm, 3 µm, 4 µm, 5 µm, 6 µm, 7 µm, 8 µm, 9 µm, 10 µm, or any value in the range of 1.2-10 µm).

In some embodiments, the lithium iron phosphate material satisfies 3% ≤ V_{f} ≤ 10% and 3% ≤ V_{b} ≤ 10% (where V_{f} or V_{b} may be 3%, 4%, 5%, 6%, 7%, 8%, 9%, 10%, or any value in the range of 3%-10%).

In some embodiments, the lithium iron phosphate material satisfies 0.2 ≤ V_{b}/V_{f} ≤ 2.5 (where V_{b}/V_{f} may be 0.2, 0.5, 1.0, 1.5, 2.0, 2.5, or any value in the range of 0.2-2.5).

V_{b}/V_{f} reflects a difference in volume fraction between the two types of particles that account for the largest volume percentages in the lithium iron phosphate materials, that is, it reflects the quantity ratio of particles with the two particle sizes. The larger the value is, the greater the difference in volume fraction of two particles is; and the smaller the value is, the smaller the difference in volume fraction of the two particle is. An excessively large or small value of the V_{b}/V_{f} fails to effectively improve the tap density of the cathode material. When V_{b}/V_{f} is two large, it indicates that the quantity of large lithium iron phosphate particles having a particle size of D_{b} is excessively high compared to that of small lithium iron phosphate particles having a particle size of D_{f}, which reduces the overall specific surface area of the lithium iron phosphate material. Conversely, when V_{b}/V_{f} is too small, it indicates that the quantity of small lithium iron phosphate particles having a particle size of D_{f} is excessively high compared to that of large lithium iron phosphate particles having a particle size of D_{b}. Since the diffusion paths formed by the packing of small lithium iron phosphate particles are relatively tortuous and longer, the diffusion of lithium ions is impeded, thereby ultimately reducing the rate performance and specific capacity of the material.

In some embodiments, the lithium iron phosphate material satisfies 2.5 ≤ D_{b}/D_{f} ≤ 12 (where D_{b}/D_{f} may be 2.5, 3.0, 3.5, 4.0, 4.5, 5.0, 5.5, 6.0, 7.5, 8.0, 8.5, 9.0, 9.5, 10.0, 10.5, 11.0, 11.5, 12.0, or any value in the range of 2.5-12).

D_{b}/D_{f} reflects a difference in particle sizes between the two types of particles that account for the largest volumetric proportions in the lithium iron phosphate material. The larger the value is, the greater the particle size difference of the two particle is; and the smaller the value is, the smaller the particle size difference of the two particle is. An excessively small value of the D_{b}/D_{f} fails to effectively utilize the combination of large and small particles grading, which is not conducive to effectively improving the tap density of the cathode material. Conversely, an excessively large value of the D_{b}/D_{f} tends to cause "over-sintering" phenomenon during the calcination of the small lithium iron phosphate particles, thus affecting the performance of the material.

In some embodiments, the lithium iron phosphate material satisfies: $2 \leq \frac{{D}_{b}}{{D}_{f}} / \frac{{V}_{b}}{{V}_{f}} \times span \times \frac{{σ}_{b}}{{σ}_{f}} \leq 70$; wherein span is calculated as span = (Dv90 - Dv10)/Dv50, and satisfies 1.5 ≤ span ≤ 5, and the Dv90, Dv50, and Dv10 are the particle sizes corresponding to cumulative volume percentages of 90%, 50%, and 10% of the lithium iron phosphate material, respectively, all in µm.

Span reflects the overall particle size distribution width of the lithium iron phosphate material. A larger span indicates a broader particle size distribution, while a smaller span indicates a narrower particle size distribution.

The lithium iron phosphate material satisfies $2 \leq \frac{{D}_{b}}{{D}_{f}} / \frac{{V}_{b}}{{V}_{f}} \times span \times \frac{{σ}_{b}}{{σ}_{f}} \leq 70$ ( $\frac{{D}_{b}}{{D}_{f}} / \frac{{V}_{b}}{{V}_{f}} \times span \times \frac{{σ}_{b}}{{σ}_{f}}$ may be 2, 4, 6, 8, 10, 12, 14, 16, 18, 20, 25, 30, 35, 40, 45, 50, 55, 60, 65, 70, or any value in the range of 2-70). The lithium iron phosphate material satisfying this range have coordinated D_{b}/D_{f}, V_{b}/V_{f}, span, and σ_{b}/σ_{f}, resulting in improved tap density and specific surface area, thereby delivering better specific capacity and rate performance.

In a second aspect, the present disclosure provides a method for preparing a lithium iron phosphate material, including the following steps:
coating a large-particle-sized iron phosphate seed crystal with polydopamine to obtain a polydopamine-partially-coated large-particle-sized iron phosphate seed crystal;
subjecting the polydopamine-partially-coated large-particle-sized iron phosphate seed crystal to vacuum dehydration to obtain a modified iron phosphate seed crystal;
mixing the modified iron phosphate seed crystal with a small-particle-sized iron phosphate seed crystal, adding an iron salt and a phosphorus source to a resulting mixture to allow precipitation reaction in water, to obtain an iron phosphate material; and
subjecting the iron phosphate material, a lithium source, and a carbon source to mixing and calcining successively, to obtain the lithium iron phosphate material.

In the present disclosure, the polydopamine-partially-coated large-particle-sized iron phosphate seed crystal is surface modified by vacuum dehydration, so that the exposed iron phosphate dihydrate on the surface is dehydrated to anhydrous iron phosphate, thereby obtaining a modified iron phosphate seed crystal with a surface partially coated with polydopamine and partially composed of anhydrous iron phosphate. Since anhydrous iron phosphate is readily soluble in an acid solution, during the precipitation reaction, the anhydrous iron phosphate on the surface of the modified iron phosphate seed crystal is dissolved to expose iron phosphate dihydrate. The exposed iron phosphate dihydrate may serve as a site for further growth of the iron phosphate crystal. Conversely, the polydopamine-coated surface is effectively passivated and cannot serve as a site for growth of iron phosphate. Due to the difference in crystal growth rate between the polydopamine-partially-coated surface and the surface of anhydrous iron phosphate in the modified iron phosphate seed crystal, the resulting iron phosphate particles exhibit poor sphericity.

During the precipitation reaction in the present disclosure, the modified iron phosphate seed crystal and small particles of iron phosphate seed crystal are both added for growth in a mixed solution of a phosphorus source and an iron salt, thus forming large and small iron phosphate particles. The modified iron phosphate seed crystal grows to large iron phosphate particles with low sphericity uniformity; while the small-particle-sized iron phosphate seed crystal grows to iron phosphate with high sphericity uniformity because of not modified, thereby obtaining iron phosphate material with a combination of large and small particles grading through a one-step process. Further, the resulting iron phosphate material is mixed with the lithium source, and then calcined, to obtain a lithium iron phosphate material with a bimodal distribution in which the difference in sphericity of large lithium iron phosphate particles is greater than that of small lithium iron phosphate particles.

In some embodiments, the method for obtaining the polydopamine-partially-coated large-particle-sized iron phosphate seed crystal comprises the following steps: mixing and dispersing the large-particle-sized iron phosphate seed crystal and a surfactant in a dopamine hydrochloride-containing Tris-HCl buffer solution, stirring for reaction, followed by filtering, washing and drying to obtain the polydopamine-partially-coated large-particle-sized iron phosphate seed crystal.

In the present disclosure, by controlling the concentration of each component in the reaction system, the polydopamine-partially-coated large-particle-sized iron phosphate seed crystal prepared using the above method enables to regulate the partial coating degree of polydopamine on surface of the large-particle-sized iron phosphate seed crystal, thereby obtaining the large-particle-sized iron phosphate seed crystal with polydopamine-partially-coated surface.

In some embodiments, the phosphorus source includes at least one of ammonium phosphate, diammonium hydrogen phosphate, ammonium dihydrogen phosphate, disodium hydrogen phosphate, and sodium dihydrogen phosphate.

In some embodiments, the iron salt includes at least one of ferric chloride, ferric nitrate, and ferric sulfate.

In some embodiments, the carbon source includes at least one of sucrose, glucose, starch, dopamine, and polyethylene glycol.

In some embodiments, the lithium source is at least one of lithium hydroxide, lithium carbonate, and lithium nitrate.

In some embodiments, a mass ratio of the carbon source content to the iron phosphate material is 0.05-0.15: 1 (the mass ratio of the carbon source content to the iron phosphate material may be 0.05, 0.08, 0.10, 0.12, 0.14, 0.15, or any value in the range of 0.05-0.15).

In some embodiments, the calcination is conducted at a temperature of 700-850°C (the temperature may be 700°C, 725°C, 750°C, 775°C, 800°C, 825°C, 850°C, or any value in the range of 700-850°C) for 20-35 h (such as 20 h, 22 h, 25 h, 27 h, 30 h, 32 h, 35 h, or any value in the range of 20-35h).

In some embodiments, the surfactant is an anionic surfactant, including at least one of sodium dodecyl benzene sulfonate (SDBS), sodium fatty alcohol ether sulfate (AES), and sodium stearate polyoxyethylene ether sulfonate (FMES). The surfactant is added to prevent agglomeration of the large-particle-size iron phosphate seed crystals, which is beneficial to generation of the polydopamine-partially-coated large-particle-sized iron phosphate seed crystal with target coating morphology.

In some embodiments, the surfactant has a concentration of 0.1-3 g/L in the Tris-HCl buffer solution (the concentration of the surfactant in the Tris-HCl buffer solution may be 0.1 g/L, 0.5 g/L, 1.0 g/L, 1.5 g/L, 2.0 g/L, 2.5 g/L, 3.0 g/L, or any value in the range of 0.1-3 g/L).

In some embodiments, a mass ratio of the large-particle-sized iron phosphate seed crystal to the surfactant is 50: 1-5 (the mass ratio may be 50:1, 50:2, 50:3, 50:4, 50:5, or any value in the range of 50: 1-5).

In some embodiments, the large-particle-sized iron phosphate seed crystal features a particle size of 400-1,500 nm (which may be 400-500 nm, 600-700 nm, 700-800 nm, 800-900 nm, 900-1,000 nm, 1,000-1,100 nm, 1,100-1,200 nm, 1,200-1,300 nm, 1,300-1,400 nm, 1,400-1,500 nm, or any value in the range of 400-1,500 nm). The value of D_{b} is affected by controlling the particle size of the large-particle-sized iron phosphate seed crystal. The value of D_{b} changes with the particle size of the large-particle-sized iron phosphate seed crystal.

In some embodiments, the small-particle-sized iron phosphate seed crystal features a particle size of 200-600 nm (which may be 200-300 nm, 300-400 nm, 400-500 nm, 500-600 nm, or any value in the range of 200-600 nm). The value of D_{f} is affected by controlling the particle size of the small-particle-sized iron phosphate seed crystal. The value of D_{f} changes with the particle size of the small-particle-sized iron phosphate seed crystal.

In some embodiments, the Tris-HCl buffer solution has a pH of 8-8.5 (which may be 8, 8.1, 8.2, 8.3, 8.4, 8.5, or any value in the range of 8-8.5).

In some embodiments, the dopamine hydrochloride has a concentration of 0.1-0.3 mg/mL in the Tris-HCl buffer solution (e.g., 0.1 mg/mL, 0.15 mg/mL, 0.2 mg/mL, 0.25 mg/mL, 0.3 mg/mL, or any value in the range of 0.1-0.3 mg/mL).

In the present disclosure, by controlling the concentration of dopamine hydrochloride, the coating amount of polydopamine on the polydopamine-partially-coated large-particle-sized iron phosphate seed crystal is controlled, thereby affecting the sample standard deviation σ_{b} of the circularity C of the large-particle-sized lithium iron phosphate. Specifically, within the specified range, the higher the concentration of the dopamine hydrochloride is, the larger the σ_{b} is.

In some embodiments, the vacuum dehydration is conducted at a temperature of 160-190°C (which may be 160°C, 165°C, 170°C, 175°C, 180°C, 185°C, 190°C, or any value in the range of 160-190°C) for 1-1.5 h (which may be 1 h, 1.1 h, 1.2 h, 1.3 h, 1.4 h, 1.5 h, or any value in the range of 1-1.5h).

At this temperature, crystal water can be dehydrated from the iron phosphate dihydrate, to form anhydrous iron phosphate. In the present disclosure, by controlling the duration and temperature of the vacuum dehydration, the thickness of the anhydrous iron phosphate formed on the surface of modified iron phosphate seed crystal is conrtolled, thereby affecting the sphericity of the resulting large iron phosphate particles. Specifically, the vacuum dehydration at a higher temperature for a longer duration increases the thickness of the anhydrous iron phosphate, which results in a lower circularity of the large iron phosphate particles obtained from the precipitation reaction, and consequently a larger σ_{b} of the large lithium iron phosphate particles obtained from subsequent calcination with the lithium source. Conversely, the vacuum dehydration at a lower temperature for a shorter duration results in a smaller σ_{b} of the resulting large lithium iron phosphate particles.

In some embodiments, a volume ratio of the modified iron phosphate seed crystal to the small-particle-sized iron phosphate seed crystal is 0.9-1.5: 1 (which may be 0.9: 1, 1.0: 1, 1.1: 1, 1.2: 1, 1.3: 1, 1.4: 1, 1.5: 1, or any value in the range of 0.9-1.5: 1).

In some embodiments, a ratio of a total volume of the modified iron phosphate seed crystal and the small-particle-sized iron phosphate seed crystal to the volume of water is 1: 4-12 (which may be 1: 4, 1: 5, 1: 6, 1: 7, 1: 8, 1: 9, 1: 10, 1: 11, 1: 12, or any value in the range of 1: 4-12).

In the present disclosure, V_{b}/V_{f} is affected by controlling a volume ratio of the modified iron phosphate seed crystal to the small-particle-sized iron phosphate seed crystal. The Vb/Vf value increases with the increase of the volume ratio of the modified iron phosphate seed crystal to the small-particle-sized iron phosphate seed crystal.

In some embodiments, the iron salt has a concentration of 0.5-1.2 mol/L in water (the iron salt in water may have a concentration of 0.5 mol/L, 0.6 mol/L, 0.7 mol/L, 0.8 mol/L, 0.9 mol/L, 1.0 mol/L, 1.1 mol/L, 1.2 mol/L, or any value in the range of 0.5-1.2 mol/L).

In some embodiments, a molar ratio of iron element in the iron salt to phosphorus element in the phosphorus source is 1: 1-1.5 (which may be 1: 1, 1: 1.2, 1: 1.3, 1: 1.4, 1: 1.5, or any value in the range of 1: 1-1.5).

During the precipitation reaction, the molar ratio of iron to phosphorus in the liquid phase will affect the particle size distribution (span) of the lithium iron phosphate material. As the ratio of iron to phosphorus decreases, the particle size distribution broadens.

In some embodiments, the precipitation reaction is conducted at a stirring rate of 350-750 rpm (which may be 350 rpm, 400 rpm, 450 rpm, 500 rpm, 550 rpm, 600 rpm, 650 rpm, 700 rpm, 750 rpm, or any value in the range of 350-750 rpm). As the stirring rate increases, the particle size of the lithium iron phosphate material becomes smaller.

In a third aspect, the present disclosure provides a cathode sheet, including a cathode current collector and a cathode material layer arranged on the cathode current collector. The cathode material layer comprises a cathode active material, which may be arranged on one surface of the cathode current collector or on both surfaces of the cathode current collector.

The cathode active material includes the lithium iron phosphate material provided in the first aspect of the present disclosure or the lithium iron phosphate material prepared by the preparation method provided in the second aspect of the present disclosure.

In a fourth aspect, the present disclosure further provides a secondary battery, including a cathode sheet, an anode sheet, and a separator. The cathode sheet includes the cathode sheet provided in the third aspect of the present disclosure.

### [Anode Sheet]

In the secondary battery of the present disclosure, the anode sheet may include an anode current collector and an anode material layer disposed on the anode current collector. The anode material layer includes an anode active material, which may be disposed on one surface of the anode current collector, or on both surfaces of the anode current collector.

In some embodiments, the anode current collector may be a metal foil or a composite current collector. For example, as the metal foil, a copper foil may be used. The composite current collector may include a polymer material substrate and a metal layer formed on at least one surface of the polymer material substrate. The composite current collector may be formed by depositing a metal material (such as copper, copper alloy, nickel, nickel alloy, titanium, titanium alloy, silver, silver alloy, and the like) on a polymer material substrate (such as polypropylene (PP), polyethylene terephthalate (PET), polybutylene terephthalate (PBT), polystyrene (PS), polyethylene (PE), and the like).

In some embodiments, the anode active material may be any anode active material known in the art used for secondary batteries. As an example, the anode active material may include at least one of the following materials: graphite (e.g., artificial graphite, natural graphite), soft carbon, hard carbon, mesocarbon microbeads, carbon fiber, carbon nanotube, silicon-based materials, tin-based materials, and lithium titanate. The silicon-based material may be selected from at least one of elemental silicon, silicon oxide compounds, silicon-carbon composites, silicon-nitrogen composites, and silicon alloys. The tin-based material may be selected from at least one of elemental tin, tin oxide compounds, and tin alloys. However, the present disclosure is not limited to these materials, and other conventional materials that can be used as anode active materials for secondary batteries may also be used. These anode active materials may be used alone or in combination of two or more.

### [Electrolyte]

The electrolyte serves to conduct ions between the cathode sheet and the anode sheet. The present disclosure has no particular limitation on the type of electrolyte, which may be selected according to requirements. For example, the electrolyte may be selected from an electrolytic solution. The electrolytic solution includes an electrolyte salt and a solvent.

In some embodiments, the electrolyte salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(oxalato)phosphate (LiDFOP), and lithium tetrafluoro(oxalato)phosphate (LiTFOP).

In some embodiments, the solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methyl sulfone (EMS), and diethyl sulfone (ESE).

In some embodiments, the electrolytic solution may further include an additive. For example, the additive may include an anode film-forming additive, a cathode film-forming additive, or an additive capable of improving certain performance of the secondary battery, such as an additive for improving overcharge performance, an additive for improving high-temperature performance, or an additive for improving low-temperature performance of the secondary battery.

### [Separator]

In the secondary battery of the present disclosure, the separator is disposed between the cathode sheet and the anode sheet to provide isolation therebetween. The type of separator is not particularly limited, and any porous separator known in the art having good chemical stability and mechanical stability may be used. In some embodiments, the material of the separator may be at least one of glass fiber, non-woven fabric, polyethylene, polypropylene, and polyvinylidene fluoride. The separator may be a single-layer film or a multilayer composite film, without particular limitation. When the separator is a multilayer composite film, the materials of each layer may be the same or different, without particular limitation.

The cathode sheet, anode sheet, and separator may be formed into an electrode assembly by a stacking process or a winding process, and the separator is disposed between the cathode sheet and the anode sheet to provide isolation. The electrode assembly is placed in an outer package, the electrolytic solution is injected, and the package is sealed to form a lithium-ion battery.

The outer package of the lithium-ion battery is used to encapsulate the electrode assembly and the electrolyte. In some embodiments, the outer package of the lithium-ion battery may be a hard case, such as a hard plastic case, an aluminum case, or a steel case. In some embodiments, the outer package of the lithium-ion battery may alternatively be a soft package, such as a pouch-type soft package. The material of the soft package may be plastic, such as one or more of polypropylene (PP), polybutylene terephthalate (PBT), and polybutylene succinate (PBS).

The present disclosure has no particular limitation on the shape of the lithium-ion battery, which may be cylindrical, prismatic, or any other shape.

In some embodiments, the lithium-ion battery may be assembled into a secondary battery module, wherein the number of lithium-ion batteries contained in the secondary battery module may be plural, and the specific number may be adjusted according to the intended application and capacity of the secondary battery module.

In some embodiments, the secondary battery module may further be assembled into a secondary battery pack, wherein the number of secondary battery modules contained in the secondary battery pack may be adjusted according to the intended application and capacity of the secondary battery pack.

The present disclosure is described in detail below with reference to the examples. The examples described below are exemplary and are merely intended to illustrate the present disclosure, and shall not be construed as limitations thereto. For the specific techniques or conditions not specified in the examples, the conventional technical methods in the art, the techniques or conditions described in the existing literature, or the product specifications may all be followed. The reagents or instruments used without indicating the manufacturers are all conventional commercial products available via market purchase.

### Example 1:

(1) Preparation of polydopamine-partially-coated large-particle-sized iron phosphate seed crystal: large-particle-sized iron phosphate seed crystal with a particle size of 800-900 nm and sodium dodecyl benzene sulfonate were dispersed at a mass ratio of 25: 1 in a Tris-HCl buffer solution containing dopamine hydrochloride at a concentration of 0.2 mg/mL through ultrasonication, and continuously stirred at a rotation speed of 750 rpm for 24 h, followed by filtration, washing, and drying to obtain the polydopamine-partially-coated large-particle-sized iron phosphate seed crystal. The sodium dodecyl benzene sulfonate had a concentration of 1.8g/L in the buffer solution, and the Tris-HCl buffer solution had a pH value of 8.5. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 200-300 nm were dispersed at a volume ratio of 1.2: 1 in deionized water, then a ferric chloride solution and a diammonium hydrogen phosphate solution were added to allow a precipitation reaction for 6h at a rotation speed of 650 rpm. Subsequently, the resulting reaction solution was transferred to a phosphoric acid solution for aging for 4 h, followed by filtration, washing, drying, and calcination, to obtain the iron phosphate material. A ratio of a total volume of the modified iron phosphate seed crystal and the small-particle-sized iron phosphate seed crystal to the volume of deionized water was 1: 8. During the precipitation reaction, iron ions in the reaction solution were maintained at a concentration of 1 mol/L by controlling the addition amount of the ferric chloride solution. During the precipitation reaction, the phosphorus element in the reaction solution was maintained at a concentration of 1.1 mol/L by controlling the addition amount of the diammonium hydrogen phosphate solution. The reaction solution was controlled at a pH of 1.5 with ammonia water.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.03, a mass ratio of glucose to the iron phosphate material was 0.05: 1, and a solid content of the slurry was 35wt%.

### Example 2:

This example was different from Example 1 in that:
during the preparation of the polydopamine-partially-coated large-particle-sized iron phosphate seed crystal in the step (1), the concentration of the dopamine hydrochloride was changed from 0.2 mg/mL to 0.1 mg/mL;
during the preparation of the modified iron phosphate seed crystal in the step (2), "the polydopamine-partially-coated large-particle-sized iron phosphate seed crystal was subjected to vacuum dehydration at 185°C for 1.5 h to obtain the modified iron phosphate seed crystal" was changed to "the polydopamine-partially-coated large-particle-sized iron phosphate seed crystal was subjected to vacuum dehydration at 160°C for 1 h to obtain the modified iron phosphate seed crystal"; and
during the preparation of the iron phosphate material in the step (3), "the resulting reaction solution was transferred to a phosphoric acid solution for aging for 4 h" was changed to "the resulting reaction solution was transferred to a phosphoric acid solution for aging for 6 h".

### Example 3:

This example was different from Example 1 in that:
during the preparation of the polydopamine-partially-coated large-particle-sized iron phosphate seed crystal in the step (1), the concentration of the dopamine hydrochloride was changed from 0.2 mg/mL to 0.3 mg/mL;
during the preparation of the modified iron phosphate seed crystal in the step (2), "the polydopamine-partially-coated large-particle-sized iron phosphate seed crystal was subjected to vacuum dehydration at 185°C for 1.5 h to obtain the modified iron phosphate seed crystal" was changed to "the polydopamine-partially-coated large-particle-sized iron phosphate seed crystal was subjected to vacuum dehydration at 190°C for 1.5 h to obtain the modified iron phosphate seed crystal"; and
during the preparation of the iron phosphate material in the step (3), "the resulting reaction solution was transferred to a phosphoric acid solution for aging for 4 h" was changed to "the resulting reaction solution was transferred to a phosphoric acid solution for aging for 3 h".

### Example 4:

This example was different from Example 1 in that:
the preparation of the iron phosphate material in the step (3), was carried out as follows: the modified iron phosphate seed crystal and small-particle-sized iron phosphate seed crystal with a particle size of 200-300 nm were dispersed at a volume ratio of 0.9: 1 in deionized water, then a ferric chloride solution and a diammonium hydrogen phosphate solution were added to allow a precipitation reaction for 6 h at a rotation speed of 750 rpm. Subsequently, the resulting reaction solution was transferred to a phosphoric acid solution for aging for 5 h, followed by filtration, washing, drying, and calcination, to obtain the iron phosphate material. A ratio of a total volume of the modified iron phosphate seed crystal and the small-particle-sized iron phosphate seed crystal with a particle size of 200-300 nm to the volume of deionized water was 1: 10. During the precipitation reaction, iron ions were maintained at a concentration of 1.1 mol/L by controlling the addition amount of the ferric chloride solution. During the precipitation reaction, the phosphorus element in the solution was maintained at a concentration of 1.43 mol/L by controlling the addition amount of the diammonium hydrogen phosphate solution.

### Example 5:

(1) Preparation of polydopamine-partially-coated large-particle-sized iron phosphate seed crystal: large-particle-sized iron phosphate seed crystal with a particle size of 500-600 nm and sodium dodecyl benzene sulfonate were dispersed at a mass ratio of 25: 1 in a Tris-HCl buffer solution containing dopamine hydrochloride at a concentration of 0.1 mg/mL through ultrasonication, and continuously stirred at a rotation speed of 1,000 rpm for 24 h, followed by filtration, washing, and drying to obtain the polydopamine-partially-coated large-particle-sized iron phosphate seed crystal. The sodium dodecyl benzene sulfonate had a concentration of 2.2g/L in the buffer solution, and the Tris-HCl buffer solution had a pH value of 8.5. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 200-300 nm were dispersed at a volume ratio of 1.2: 1 in deionized water, then a ferric chloride solution and a diammonium hydrogen phosphate solution were added to allow a precipitation reaction for 6 h at a rotation speed of 600 rpm. Subsequently, the resulting reaction solution was transferred to a phosphoric acid solution for aging for 6 h, followed by filtration, washing, drying, and calcination, to obtain the iron phosphate material. A ratio of a total volume of the modified iron phosphate seed crystal and the small-particle-sized iron phosphate seed crystal with a particle size of 200-300 nm to the volume of deionized water was 1: 8. During the precipitation reaction, iron ions in the reaction solution were maintained at a concentration of 0.9 mol/L by controlling the addition amount of the ferric chloride solution. During the precipitation reaction, the phosphorus element in the solution was maintained at a concentration of 0.99 mol/L by controlling the addition amount of the diammonium hydrogen phosphate solution.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.03, a mass ratio of glucose to the iron phosphate material was 0.05: 1, and a solid content of the slurry was 35wt%.

### Example 6:

This example was different from Example 1 in that:
during the preparation of the iron phosphate material in the step (3), "the modified iron phosphate seed crystal and the small-particle-sized iron phosphate seed crystal with a particle size of 200-300 nm were dispersed at a volume ratio of 1.2: 1 in deionized water" was changed to "the modified iron phosphate seed crystal and the small-particle-sized iron phosphate seed crystal with a particle size of 200-300 nm were dispersed at a volume ratio of 1.5: 1 in deionized water";
"allow a precipitation reaction for 6 h at a rotation speed of 650 rpm" was changed to "allow a precipitation reaction for 6 h at a rotation speed of 400 rpm"; and
"during the precipitation reaction, the phosphorus element in the solution was maintained at a concentration of 1.1 mol/L by controlling the addition amount of the diammonium hydrogen phosphate solution" was changed to "during the precipitation reaction, the phosphorus element in the solution was maintained at a concentration of 1.5 mol/L by controlling the addition amount of the diammonium hydrogen phosphate solution".

### Example 7:

This example was different from Example 1 in that:
during the preparation of the iron phosphate material in the step (3), "the modified iron phosphate seed crystal and the small-particle-sized iron phosphate seed crystal with a particle size of 200-300 nm were dispersed at a volume ratio of 1.2: 1 in deionized water" was changed to "the modified iron phosphate seed crystal and the small-particle-sized iron phosphate seed crystal with a particle size of 200-300 nm were dispersed at a volume ratio of 0.9: 1 in deionized water";
"allow a precipitation reaction for 6 h at a rotation speed of 650 rpm" was changed to "allow a precipitation reaction for 6 h at a rotation speed of 750 rpm"; and
"during the precipitation reaction, the phosphorus element in the solution was maintained at a concentration of 1.1 mol/L by controlling the addition amount of the diammonium hydrogen phosphate solution" was changed to "during the precipitation reaction, the phosphorus element in the solution was maintained at a concentration of 1.3 mol/L by controlling the addition amount of the diammonium hydrogen phosphate solution".

### Example 8:

This example was different from Example 1 in that:
during the preparation of the polydopamine-partially-coated large-particle-sized iron phosphate seed crystal in the step (1), "large-particle-sized iron phosphate seed crystal with a particle size of 800-900 nm and sodium dodecyl benzene sulfonate were dispersed at a mass ratio of 25: 1 in a Tris-HCl buffer solution containing dopamine hydrochloride at a concentration of 0.2 mg/mL through ultrasonication, and continuously stirred at a rotation speed of 750 rpm for 24 h, followed by filtration, washing, and drying to obtain the polydopamine-partially-coated large-particle-sized iron phosphate seed crystal, thesodium dodecyl benzene sulfonate had a concentration of 1.8g/L in the buffer solution" was changed to "large-particle-sized iron phosphate seed crystal with a particle size of 1,300-1,400 nm and sodium dodecyl benzene sulfonate were dispersed at a mass ratio of 25: 1 in a Tris-HCl buffer solution containing dopamine hydrochloride at a concentration of 0.2 mg/mL through ultrasonication, and continuously stirred at a rotation speed of 750 rpm for 24 h, followed by filtration, washing, and drying to obtain the polydopamine-partially-coated large-particle-sized iron phosphate seed crystal, the sodium dodecylbenzene sulfonate had a concentration of 0.9g/L in the buffer solution";
during the preparation of the iron phosphate material in the step (3), "allow a precipitation reaction for 6 h at a rotation speed of 650 rpm, subsequently, the resulting reaction solution was transferred to a phosphoric acid solution for aging for 4 h" was changed to "allow a precipitation reaction for 6 h at a rotation speed of 500 rpm, subsequently, the resulting reaction solution was transferred to a phosphoric acid solution for aging for 7 h"; and
"during the precipitation reaction, the phosphorus element in the solution was maintained at a concentration of 1.1 mol/L by controlling the addition amount of the diammonium hydrogen phosphate solution" was changed to "during the precipitation reaction, the phosphorus element in the solution was maintained at a concentration of 1.5 mol/L by controlling the addition amount of the diammonium hydrogen phosphate solution".

### Example 9:

This example was different from Example 1 in that:
the preparation of the iron phosphate material in the step (3) was carried out as follows: the modified iron phosphate seed crystal and small-particle-sized iron phosphate seed crystal with a particle size of 500-600 nm were dispersed at a volume ratio of 1.2: 1 in deionized water, then a ferric chloride solution and a diammonium hydrogen phosphate solution were added to allow a precipitation reaction for 6 h at a rotation speed of 700 rpm. Subsequently, the resulting reaction solution was transferred to a phosphoric acid solution for aging for 4 h, followed by filtration, washing, drying, and calcination to obtain the iron phosphate material. A ratio of a total volume of the modified iron phosphate seed crystal and the small-particle-sized iron phosphate seed crystal with a particle size of 500-600 nm to the volume of deionized water was 1: 8. During the precipitation reaction, iron ions were maintained at a concentration of 1 mol/L by controlling the addition amount of the ferric chloride solution. During the precipitation reaction, the phosphorus element in the solution was maintained at a concentration of 1.3 mol/L by controlling the addition amount of the diammonium hydrogen phosphate solution.

### Example 10:

This example was different from Example 1 in that:
during the preparation of the polydopamine-partially-coated large-particle-sized iron phosphate seed crystal in the step (1), the "sodium dodecyl benzene sulfonate" was changed to "sodium fatty alcohol ether sulfate"; and
the preparation of the iron phosphate material in the step (3) was carried out as follows: the modified iron phosphate seed crystal and small-particle-sized iron phosphate seed crystal with a particle size of 200-300 nm were dispersed at a volume ratio of 1.4: 1 in deionized water, then a ferric chloride solution and a diammonium hydrogen phosphate solution were added to allow a precipitation reaction for 6 h at a rotation speed of 750 rpm. Subsequently, the resulting reaction solution was transferred to a phosphoric acid solution for aging for 6 h, followed by filtration, washing, drying, and calcination to obtain the iron phosphate material. A ratio of a total volume of the modified iron phosphate seed crystal and the small-particle-sized iron phosphate seed crystal with a particle size of 200-300 nm to the volume of deionized water was 1: 12. During the precipitation reaction, iron ions were maintained at a concentration of 1.2 mol/L by controlling the addition amount of the ferric chloride solution. During the precipitation reaction, the phosphorus element in the solution was maintained at a concentration of 1.68 mol/L by controlling the addition amount of the diammonium hydrogen phosphate solution.

### Example 11:

This example was different from Example 1 in that:
during the preparation of the polydopamine-partially-coated large-particle-sized iron phosphate seed crystal in the step (1), the "sodium dodecyl benzene sulfonate" was changed to "sodium fatty alcohol ether sulfate"; and
the preparation of the iron phosphate material in the step (3) was carried out as follows: the modified iron phosphate seed crystal and small-particle-sized iron phosphate seed crystal with a particle size of 200-300 nm were dispersed at a volume ratio of 1.1: 1 in deionized water, and then a ferric chloride solution and a diammonium hydrogen phosphate solution were added to allow a precipitation reaction for 6 h at a rotation speed of 600 rpm. Subsequently, the resulting reaction solution was transferred to a phosphoric acid solution for aging for 5 h, followed by filtration, washing, drying, and calcination to obtain the iron phosphate material. A ratio of a total volume of the modified iron phosphate seed crystal and the small-particle-sized iron phosphate seed crystal with a particle size of 200-300 nm to the volume of deionized water was 1: 7. During the precipitation reaction, iron ions were maintained at a concentration of 0.8 mol/L by controlling the addition amount of the ferric chloride solution. During the precipitation reaction, the phosphorus element in the solution was maintained at a concentration of 0.88 mol/L by controlling the addition amount of the diammonium hydrogen phosphate solution.

### Example 12:

(1) Preparation of polydopamine-partially-coated large-particle-sized iron phosphate seed crystal: large-particle-sized iron phosphate seed crystal with a particle size of 1,200-1,300 nm and sodium dodecyl benzene sulfonate were dispersed at a mass ratio of 10: 1 in a Tris-HCl buffer solution containing dopamine hydrochloride at a concentration of 0.12 mg/mL through ultrasonication, and continuously stirred at a rotation speed of 650 rpm for 24 h, followed by filtration, washing, and drying to obtain the polydopamine-partially-coated large-particle-sized iron phosphate seed crystal. The sodium dodecyl benzene sulfonate had a concentration of 2.6 g/L in the buffer solution, and the Tris-HCl buffer solution had a pH value of 8.0. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 400-500 nm were dispersed at a volume ratio of 1: 1 in deionized water, then a ferric chloride solution and a diammonium hydrogen phosphate solution were added to allow a precipitation reaction for 6 h at a rotation speed of 400 rpm for 6 h. Subsequently, the resulting reaction solution was transferred to a phosphoric acid solution for aging for 4 h, followed by filtration, washing, drying, and calcination to obtain the iron phosphate material. A ratio of a total volume of the modified iron phosphate seed crystal and the small-particle-sized iron phosphate seed crystal with a particle size of 400-500 nm to the volume of deionized water was 1: 6. During the precipitation reaction, iron ions were maintained at a concentration of 0.6 mol/L by controlling the addition amount of the ferric chloride solution. During the precipitation reaction, the phosphorus element in the solution was maintained at a concentration of 0.66 mol/L by controlling the addition amount of the diammonium hydrogen phosphate solution.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.01, a mass ratio of glucose to the iron phosphate material was 0.05: 1, and a solid content of the slurry was 35wt%.

### Example 13:

(1) Preparation of polydopamine-partially-coated large-particle-sized iron phosphate seed crystal: large-particle-sized iron phosphate seed crystal with a particle size of 800-900 nm and sodium dodecyl benzene sulfonate were dispersed at a mass ratio of 35: 1 in a Tris-HCl buffer solution containing dopamine hydrochloride at a concentration of 0.2 mg/mL through ultrasonication, and continuously stirred at a rotation speed of 500 rpm for 24 h, followed by filtration, washing, and drying to obtain the polydopamine-partially-coated large-particle-sized iron phosphate seed crystal. The sodium dodecyl benzene sulfonate had a concentration of 2.6 g/L in the buffer solution, and the Tris-HCl buffer solution had a pH value of 8.5. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 200-300 nm were dispersed at a volume ratio of 0.9: 1 in deionized water, then a ferric chloride solution and a diammonium hydrogen phosphate solution were added to allow a precipitation reaction for 6 h at a rotation speed of 750 rpm. Subsequently, the resulting reaction solution was transferred to a phosphoric acid solution for aging for 4 h, followed by filtration, washing, drying, and calcination to obtain the iron phosphate material. A ratio of a total volume of the modified iron phosphate seed crystal and the small-particle-sized iron phosphate seed crystal with a particle size of 200-300 nm to the volume of deionized water was 1: 12. During the precipitation reaction, iron ions were maintained at a concentration of 1.2 mol/L by controlling the addition amount of the ferric chloride solution. During the precipitation reaction, the phosphorus element in the solution was maintained at a concentration of 1.56 mol/L by controlling the addition amount of the diammonium hydrogen phosphate solution.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.01, a mass ratio of glucose to the iron phosphate material was 0.05: 1, and a solid content of the slurry was 35wt%.

### Example 14:

(1) Preparation of polydopamine-partially-coated large-particle-sized iron phosphate seed crystal: large-particle-sized iron phosphate seed crystal with a particle size of 500-600 nm and sodium dodecyl benzene sulfonate were dispersed at a mass ratio of 25: 1 in a Tris-HCl buffer solution containing dopamine hydrochloride at a concentration of 0.1 mg/mL through ultrasonication, and continuously stirred at a rotation speed of 750 rpm for 24 h, followed by filtration, washing, and drying to obtain the polydopamine-partially-coated large-particle-sized iron phosphate seed crystal. The sodium dodecyl benzene sulfonate had a concentration of 2.0g/L in the buffer solution, and the Tris-HCl buffer solution had a pH value of 8.5. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 200-300 nm were dispersed at a volume ratio of 1.5: 1 in deionized water, then a ferric chloride solution and a diammonium hydrogen phosphate solution were added to allow a precipitation reaction for 6 h at a rotation speed of 500 rpm. Subsequently, the resulting reaction solution was transferred to a phosphoric acid solution for aging for 4 h, followed by filtration, washing, drying, and calcination to obtain the iron phosphate material. A ratio of a total volume of the modified iron phosphate seed crystal and the small-particle-sized iron phosphate seed crystal with a particle size of 200-300 nm to the volume of deionized water was 1: 5. During the precipitation reaction, iron ions were maintained at a concentration of 0.7 mol/L by controlling the addition amount of the ferric chloride solution. During the precipitation reaction, the phosphorus element in the solution was maintained at a concentration of 0.77 mol/L by controlling the addition amount of the diammonium hydrogen phosphate solution.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.02, a mass ratio of glucose to the iron phosphate material was 0.05: 1, and a solid content of the slurry was 35wt%.

### Example 15:

(1) Preparation of polydopamine-partially-coated large-particle-sized iron phosphate seed crystal: large-particle-sized iron phosphate seed crystal with a particle size of 1,100-1,200 nm and sodium dodecyl benzene sulfonate were dispersed at a mass ratio of 15: 1 in a Tris-HCl buffer solution containing dopamine hydrochloride at a concentration of 0.2 mg/mL through ultrasonication, and continuously stirred at a rotation speed of 600 rpm for 24 h, followed by filtration, washing, and drying to obtain the polydopamine-partially-coated large-particle-sized iron phosphate seed crystal. The sodium dodecyl benzene sulfonate had a concentration of 1.2g/L in the buffer solution, and the Tris-HCl buffer solution had a pH value of 8.5. The drying was carried out at a temperature of 80°C for 6 h.
(2) Preparation of modified iron phosphate seed crystal: the polydopamine-partially-coated large-particle-sized iron phosphate seed crystal was subjected to vacuum dehydration at 185°C for 1.5 h to obtain the modified iron phosphate seed crystal.
(3) Preparation of iron phosphate material: the modified iron phosphate seed crystal and small-particle-sized iron phosphate seed crystal with a particle size of 500-600 nm were dispersed at a volume ratio of 1.4: 1 in deionized water, then a ferric chloride solution and a diammonium hydrogen phosphate solution were added to allow a precipitation reaction for 6 h at a rotation speed of 600 rpm. Subsequently, the resulting reaction solution was transferred to a phosphoric acid solution for aging for 6 h, followed by filtration, washing, drying, and calcination, to obtain the iron phosphate material. A ratio of a total volume of the modified iron phosphate seed crystal and the small-particle-sized iron phosphate seed crystal with a particle size of 500-600 nm to the volume of deionized water was 1: 7. During the precipitation reaction, iron ions were maintained at a concentration of 0.8 mol/L by controlling the addition amount of the ferric chloride solution. During the precipitation reaction, the phosphorus element in the solution was maintained at a concentration of 1.12 mol/L by controlling the addition amount of the diammonium hydrogen phosphate solution.
(4) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.01, a mass ratio of glucose to the iron phosphate material was 0.05: 1, and a solid content of the slurry was 35wt%.

### Comparative Example 1:

This comparative example was different from Example 1 in that:
during the preparation of the polydopamine-partially-coated large-particle-sized iron phosphate seed crystal in the step (1), "the concentration of the dopamine hydrochloride was changed from 0.2 mg/mL to 0.4 mg/mL";
"continuously stirred at a rotation speed of 750 rpm for 24 h" was changed to "continuously stirred at a rotation speed of 500 rpm for 24 h";
during the preparation of the modified iron phosphate seed crystal in the step (2), "the polydopamine-partially-coated large-particle-sized iron phosphate seed crystal was subjected to vacuum dehydration at 185°C for 1.5 h to obtain the modified iron phosphate seed crystal" was changed to "the polydopamine-partially-coated large-particle-sized iron phosphate seed crystal was subjected to vacuum dehydration at 195°C for 2 h to obtain the modified iron phosphate seed crystal"; and
the preparation of the iron phosphate material in the step (3) was carried out as follows: the modified iron phosphate seed crystal and small-particle-sized iron phosphate seed crystal with a particle size of 200-300 nm were dispersed at a volume ratio of 1.3: 1 in deionized water, then a ferric chloride solution and a diammonium hydrogen phosphate solution were added to allow a precipitation reaction for 6 h at a rotation speed of 400 rpm. Subsequently, the resulting reaction solution was transferred to a phosphoric acid solution for aging for 3 h, followed by filtration, washing, drying, and calcination to obtain the iron phosphate material. A ratio of a total volume of the modified iron phosphate seed crystal and the small-particle-sized iron phosphate seed crystal with a particle size of 200-300 nm to the volume of deionized water was 1: 8. During the precipitation reaction, iron ions were maintained at a concentration of 1 mol/L by controlling the addition amount of the ferric chloride solution. During the precipitation reaction, the phosphorus element in the solution was maintained at a concentration of 1.1 mol/L by controlling the addition amount of the diammonium hydrogen phosphate solution.

### Comparative Example 2:

(1) Preparation of modified iron phosphate seed crystal: large-particle-sized iron phosphate seed crystal with a particle size of 800-900 nm was dried at 80°C for 5 h, and then subjected to vacuum dehydration at 150°C for 1 h to obtain the modified iron phosphate seed crystal.
(2) Preparation of iron phosphate material: the modified iron phosphate seed crystal and small-particle-sized iron phosphate seed crystal with a particle size of 200-300 nm were dispersed at a volume ratio of 1.2: 1 in deionized water, then a ferric chloride solution and a diammonium hydrogen phosphate solution were added to allow a precipitation reaction for 6 h at a rotation speed of 650 rpm. Subsequently, the resulting reaction solution was transferred to a phosphoric acid solution for aging for 4 h, followed by filtration, washing, drying, and calcination to obtain the iron phosphate material. A ratio of a total volume of the modified iron phosphate seed crystal and the small-particle-sized iron phosphate seed crystal to the volume of deionized water was 1: 8. During the precipitation reaction, iron ions in the reaction solution were maintained at a concentration of 1 mol/L by controlling the addition amount of the ferric chloride solution. During the precipitation reaction, the phosphorus element in the reaction solution was maintained at a concentration of 1.1 mol/L by controlling the addition amount of the diammonium hydrogen phosphate solution. The reaction solution was controlled at a pH of 1.5 with ammonia water.
(3) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.03, a mass ratio of glucose to the iron phosphate material was 0.05: 1, and a solid content of the slurry was 35wt%.

### Comparative Example 3:

This comparative example was different from Comparative Example 2 in that:
during the preparation of the modified iron phosphate seed crystal in the step (1), the "vacuum dehydration at 150°C for 1 h" was changed to "vacuum dehydration at 200°C for 1 h."

### Comparative Example 4:

(1) Preparation of iron phosphate material: large-particle-sized iron phosphate seed crystal with a particle size of 800-900 nm and small-particle-sized iron phosphate seed crystal with a particle size of 200-300 nm were dispersed at a volume ratio of 1.2: 1 in deionized water, then a ferric chloride solution and a diammonium hydrogen phosphate solution were added to allow a precipitation reaction for 6 h at a rotation speed of 650 rpm. Subsequently, the resulting reaction solution was transferred to a phosphoric acid solution for aging for 4 h, followed by filtration, washing, drying, and calcination to obtain the iron phosphate material.
   A ratio of a total volume of the large-particle-sized iron phosphate seed crystal and the small-particle-sized iron phosphate seed crystal to the volume of deionized water was 1: 8. During the precipitation reaction, iron ions in the reaction solution were maintained at a concentration of 1 mol/L by controlling the addition amount of the ferric chloride solution. During the precipitation reaction, the phosphorus element in the reaction solution was maintained at a concentration of 1.1 mol/L by controlling the addition amount of the diammonium hydrogen phosphate solution. The reaction solution was controlled at a pH of 1.5 with ammonia water.
(2) Preparation of lithium iron phosphate material: the iron phosphate material, lithium hydroxide, glucose, and ethanol were mixed and then ground to obtain a slurry; and the slurry was dried, ground, and then calcined at a temperature of 750°C for 20 h to obtain the lithium iron phosphate material. A molar ratio of iron element to lithium element in the slurry was 1: 1.03, a mass ratio of glucose to the iron phosphate material was 0.05: 1, and a solid content of the slurry was 35wt%.

### Comparative Example 5:

This comparative example was different from Example 1 in that:
during the preparation of the polydopamine-partially-coated large-particle-sized iron phosphate seed crystal in the step (1), "the concentration of the dopamine hydrochloride was changed from 0.2 mg/mL to 0.4 mg/mL";
"continuously stirred at a rotation speed of 750 rpm for 24 h" was changed to "continuously stirred at a rotation speed of 400 rpm for 24 h";
during the preparation of the modified iron phosphate seed crystal in the step (2), "the polydopamine-partially-coated large-particle-sized iron phosphate seed crystal was subjected to vacuum dehydration at 185°C for 1.5 h" was changed to "the polydopamine-partially-coated large-particle-sized iron phosphate seed crystal was subjected to vacuum dehydration at 205°C for 1 h".

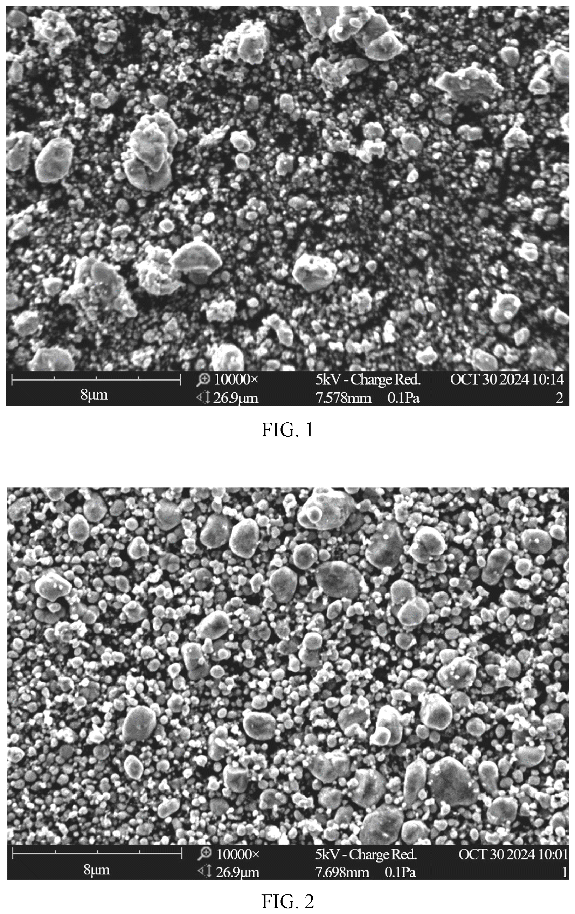

The lithium iron phosphate material prepared in each of the above examples and comparative examples was tested, and specific items and methods were as follows:
1. Particle size distribution: according to GB/T 19077-2016, the lithium iron phosphate material prepared in each of the examples and comparative examples was tested using a laser particle size analyzer for particle size distribution information. The test results of the examples and the comparative examples were as shown in Table 1.

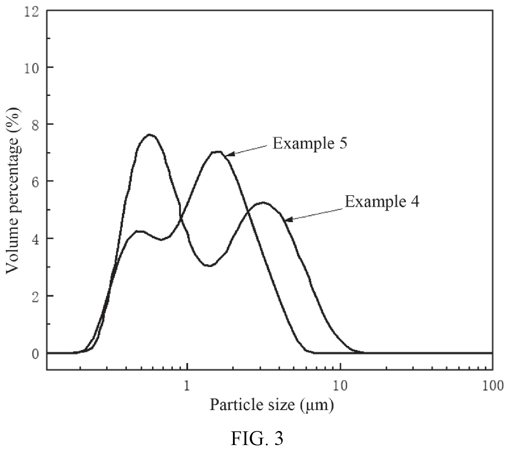

   FIG. 3 shows particle size distribution curves of lithium iron phosphate materials prepared in Examples 4-5. As can be seen from FIG. 3, the lithium iron phosphate material prepared in Example 5 has smaller D_{b} and D_{f}; smaller V_{f}, and larger V_{b} than that prepared in Example 4. The above results show that particle size distribution characteristics of the lithium iron phosphate material can be effectively controlled according to the method provided in the present disclosure and by controlling the parameters in the preparation process, thereby preparing the lithium iron phosphate material with target characteristics.
2. Morphology characterization: the lithium iron phosphate sample prepared in each of the examples and comparative examples was tested by using a scanning electron microscope (SEM). FIG. 1 is an SEM image of a lithium iron phosphate material prepared in Example 1. As can be seen from FIG. 1, large-particle-sized lithium iron phosphate material with better circularity and poorer circularity are both present. FIG. 2 is an SEM image of the lithium iron phosphate material prepared in Comparative Example 2, which shows that the large-particle-sized lithium iron phosphate particles all exhibit better sphericity.
3. Circularity calculation: the SEM image was analyzed using ImageJ, and specific steps were as follows:
   1) obtaining an SEM image of an analyzable lithium iron phosphate material.
   2) identifying boundaries of particles in the SEM image using "Magic Wand" tool in ImageJ to independently select a projected area of each particle in the SEM image.
   3) obtaining the area, perimeter and circularity C of the projected area of each lithium iron phosphate particle by analyzing the SEM image using ImageJ.
   4) obtaining D_{f} and D_{b} according to the particle size distribution curve, and calculating areas of corresponding standard circles thereof respectively to determine the standard for identifying large lithium iron phosphate particles and small lithium iron phosphate particles. Formula for the area S of a standard circle is: S=1/4×π×d², where d is either D_{f} or D_{b}. Large lithium iron phosphate particles are defined as those having a projected area larger than or equal to Sₘₐₓ=1/4×π×D_{b}², and small lithium iron phosphate particles are defined as those having a projected area smaller than or equal to Sₘᵢₙ=1/4×π×D_{f}².
   5) filtering the data obtained in the step 3) based on the standard for large lithium iron phosphate particles and small lithium iron phosphate particles.
   6) calculating a sample standard deviation of the circularity C for the large plithium iron phosphate particles and the small lithium iron phosphate particles based on the data filtered in the step 5).

The formula for calculating circularity is: C=(4×π×A)/P², where A is the area of the projected area of lithium iron phosphate particles, and P is the perimeter of the projected area. Formula for the sample standard deviation is: $σ = \sqrt{\frac{{\sum }_{i = 1}^{N} {\left({c}_{i}-\overline{c}\right)}^{2}}{N - 1}}$, where the number N of samples shall be at least 30 when the sample standard deviation is calculated, Cᵢ is circularity C of an i-th lithium iron phosphate particle, with 0.15 ≤ C ≤ 1.00, and C̅ is an average circularity of N lithium iron phosphate particles.

The test results of the examples and the comparative examples were shown in Table 1.

### 4. Tap density test:

According to GB/T 5162-2006, the lithium iron phosphate material prepared in each of the examples and comparative examples was tested using a tap density meter BT-302. The test results of the examples and comparative examples were shown in Table 2.

### 5. Specific surface area test:

According to GB/T 19587-2004, the lithium iron phosphate material prepared in each of the examples and comparative examples was tested for specific surface area thereof using a physical adsorption analyzer. The test results of the examples and comparative examples were shown in Table 2.

### 6. Electrochemical performance test:

### Battery assembly:

The cathode material, acetylene black, and PVDF were mixed at a mass ratio of 75: 15: 10 to form a uniform slurry, which was uniformly coated on an aluminum foil substrate to serve as the cathode of the battery. In a simulated battery, a lithium sheet was used as the anode, a polypropylene porous film was used as a separator, and the electrolytic solution was prepared by dissolving 1 mol of LiPF₆ in 1 L of a mixed solvent of ethylene carbonate (EC) and dimethyl carbonate (DMC) at a volume ratio of 1: 1. The cathode, the anode, the electrolytic solution, and the separator were assembled into a battery in an argon-protected glove box.

### Rate Capability Test Procedure for the simulated battery:

The battery was first charged to 4.2 V at a constant current, and then discharged to 2.0 V at a rate current, wherein the discharged capacity was the discharge capacity at that rate. After the discharge was completed, the battery was discharged to 2.0 V at a constant current, and then tested at a next rate. The specific discharge capacity of the battery was tested at 0.1C, 1C, and 5C respectively, and the test results were shown in Table 2.

**Table 1 Parameters of lithium iron phosphate material**

| Items | D_{b}/µm | D_{f}/µm | V_{b}/% | V_{f}/% | span | σ_{b} | σ_{f} | D_{b}/D_{f} | V_{b}/V_{f} | σ_{b}/σ_{f} | $\frac{{D}_{b}}{{D}_{f}} / \frac{{V}_{b}}{{V}_{f}} \times span \times \frac{{σ}_{b}}{{σ}_{f}}$ |
|---|---|---|---|---|---|---|---|---|---|---|---|
| Example 1 | 3.40 | 0.53 | 5.12 | 3.33 | 3.10 | 0.093 | 0.040 | 6.42 | 1.54 | 2.35 | 30.37 |
| Example 2 | 3.37 | 0.54 | 4.92 | 3.13 | 3.36 | 0.064 | 0.043 | 6.24 | 1.57 | 1.25 | 16.69 |
| Example 3 | 3.54 | 0.59 | 5.24 | 3.46 | 2.92 | 0.121 | 0.026 | 6.00 | 1.51 | 4.68 | 54.30 |
| Example 4 | 3.12 | 0.56 | 5.33 | 7.72 | 3.94 | 0.080 | 0.038 | 5.57 | 0.69 | 2.10 | 66.79 |
| Example 5 | 1.65 | 0.46 | 7.15 | 4.35 | 1.95 | 0.062 | 0.053 | 3.59 | 1.64 | 1.18 | 5.04 |
| Example 6 | 3.48 | 0.55 | 8.52 | 3.48 | 3.18 | 0.083 | 0.036 | 6.33 | 2.45 | 2.28 | 18.73 |
| Example 7 | 3.24 | 0.51 | 5.14 | 7.65 | 3.15 | 0.078 | 0.034 | 6.35 | 0.67 | 2.31 | 68.96 |
| Example 8 | 5.16 | 0.52 | 5.27 | 3.21 | 3.14 | 0.082 | 0.037 | 9.92 | 1.64 | 2.24 | 42.54 |
| Example 9 | 3.56 | 0.92 | 4.86 | 3.25 | 3.12 | 0.079 | 0.034 | 3.87 | 1.50 | 2.33 | 18.76 |
| Example 10 | 3.56 | 0.56 | 4.98 | 3.21 | 4.20 | 0.091 | 0.040 | 6.36 | 1.55 | 2.27 | 39.12 |
| Example 11 | 3.39 | 0.53 | 5.56 | 3.74 | 1.87 | 0.121 | 0.052 | 6.40 | 1.49 | 2.31 | 18.55 |
| Example 12 | 4.15 | 0.80 | 5.45 | 5.10 | 1.98 | 0.094 | 0.064 | 5.19 | 1.07 | 1.48 | 14.21 |
| Example 13 | 3.46 | 0.75 | 2.35 | 4.65 | 3.98 | 0.102 | 0.047 | 4.61 | 0.51 | 2.16 | 77.71 |
| Example 14 | 1.46 | 0.58 | 7.75 | 3.12 | 1.68 | 0.070 | 0.061 | 2.52 | 2.48 | 1.15 | 1.96 |
| Example 15 | 4.20 | 2.20 | 7.32 | 2.54 | 1.90 | 0.102 | 0.047 | 1.91 | 2.88 | 2.15 | 2.71 |
| Comparative Example 1 | 3.36 | 0.53 | 5.21 | 3.32 | 3.18 | 0.164 | 0.030 | 6.34 | 1.57 | 5.42 | 69.60 |
| Comparative Example 2 | 3.61 | 0.57 | 5.36 | 3.27 | 3.25 | 0.043 | 0.045 | 6.33 | 1.64 | 0.95 | 11.92 |
| Comparative Example 3 | 3.39 | 0.53 | 4.97 | 3.43 | 3.46 | 0.061 | 0.069 | 6.40 | 1.45 | 0.88 | 13.50 |
| Comparative Example 4 | 3.34 | 0.58 | 5.04 | 3.26 | 3.16 | 0.056 | 0.054 | 5.76 | 1.55 | 1.04 | 12.21 |
| Comparative Example 5 | 3.46 | 0.54 | 5.09 | 3.26 | 2.98 | 0.167 | 0.030 | 6.41 | 1.56 | 5.57 | 68.08 |

**Table 2 Physical and electrochemical performances of lithium iron phosphate material**

| Items | Physical performance | | Electrochemical performance | | |
|---|---|---|---|---|---|
| | Tap density, g/mL | BET, m²/g | 0.1C, mAh/g | 1C, mAh/g | 5C, mAh/g |
| Example 1 | 1.24 | 13.56 | 163.56 | 146.21 | 134.25 |
| Example 2 | 1.26 | 12.54 | 158.45 | 139.80 | 129.45 |
| Example 3 | 1.20 | 15.67 | 157.46 | 138.45 | 128.72 |
| Example 4 | 0.84 | 12.81 | 158.40 | 139.40 | 126.67 |
| Example 5 | 0.90 | 12.37 | 157.92 | 137.30 | 125.75 |
| Example 6 | 1.15 | 12.51 | 159.84 | 144.34 | 126.75 |
| Example 7 | 0.75 | 14.36 | 161.59 | 145.57 | 131.84 |
| Example 8 | 1.28 | 12.82 | 160.25 | 142.76 | 128.43 |
| Example 9 | 1.16 | 12.94 | 162.89 | 143.79 | 131.79 |
| Example 10 | 1.22 | 13.37 | 160.54 | 142.48 | 130.86 |
| Example 11 | 1.21 | 13.26 | 161.45 | 144.76 | 131.45 |
| Example 12 | 1.15 | 12.59 | 161.35 | 142.14 | 132.36 |
| Example 13 | 0.81 | 12.32 | 157.12 | 136.21 | 124.12 |
| Example 14 | 0.82 | 12.17 | 156.67 | 135.24 | 123.65 |
| Example 15 | 1.28 | 12.21 | 160.21 | 141.25 | 127.46 |
| Comparative Example 1 | 0.70 | 15.89 | 154.26 | 131.42 | 115.25 |
| Comparative Example 2 | 1.28 | 12.40 | 154.42 | 133.46 | 119.45 |
| Comparative Example 3 | 1.32 | 12.29 | 154.32 | 131.15 | 115.24 |
| Comparative Example 4 | 1.27 | 12.45 | 156.72 | 133.85 | 121.91 |
| Comparative Example 5 | 0.68 | 16.42 | 153.89 | 132.10 | 113.89 |

As can be seen from Tables 1-2, the lithium iron phosphate materials in Examples 1-3 and Comparative Examples 1-5 have different σ_{b}/σ_{f}. With the increase of σ_{b}/σ_{f}, the tap density of the lithium iron phosphate material decreases, while the Brunauer-Emmett-Teller (BET, specific surface area) increases. The specific discharge capacity at 0.1C shows a trend of first increasing and then decreasing, and the capacity retention rate at 0.1C to 5C also shows a trend of first increasing and then decreasing. Specifically, as can be seen from Example 1, Example 2 and Comparative Example 2, as the σ_{b}/σ_{f} increases, the morphology uniformity of the large lithium iron phosphate particles decreases, thereby reducing the grading effect of lithium iron phosphate, and reducing the tap density. However, the irregular large particles increase the BET, thereby enhancing the overall specific surface area of the lithium iron phosphate material, which is favorable for deintercalation of Li⁺, thus increasing the specific capacity and rate performance. As can be seen from Example 1, Example 3, and Comparative Example 1, as the σ_{b}/σ_{f} further increases, the morphology uniformity of the large lithium iron phosphate particles becomes excessively low, thereby further reducing the tap density. Meanwhile, these irregular large particles further increase the BET. However, the irregular large particles increase the internal resistance of the battery, and reduce the specific capacity and the capacity retention rate from 0.1C to 5C. Lithium iron phosphate material in the range of 1.10 ≤ σ_{b}/σ_{f} ≤ 5.00 exhibits good specific capacity and rate performance.

As can be seen from Examples 1, 4-5, and 13-14, the values of $\frac{{D}_{b}}{{D}_{f}} / \frac{{V}_{b}}{{V}_{f}} \times span \times \frac{{σ}_{b}}{{σ}_{f}}$ in Examples 1 and 4-5 are within the range defined in the present disclosure, while that in Example 13-14 fall beyond the range defined in the present disclosure. It can be seen that lithium iron phosphate material with the value of $\frac{{D}_{b}}{{D}_{f}} / \frac{{V}_{b}}{{V}_{f}} \times span \times \frac{{σ}_{b}}{{σ}_{f}}$ within the range defined in the present disclosure has higher tap density and specific surface area, and therefore has better specific capacity and capacity retention rate from 0.1C to 5C.

The lithium iron phosphate materials in Examples 1, 6 and 7 only greatly differ in the V_{b}/V_{f}. As the value of V_{b}/V_{f} increases, the tap density of the lithium iron phosphate material presents a trend of first increasing and then decreasing, the BET gradually decreases, and the specific discharge capacity at 0.1C and the capacity retention rate from 0.1C to 5C also present a trend of first increasing and then decreasing. Specifically, as can be seen from Examples 1 and 7, the increase of the value of the V_{b}/V_{f} indicates a relatively higher proportion the large lithium iron phosphate particles with a particle size of D_{b}, or a relatively lower proportion of the small lithium iron phosphate particles with a particle size of D_{f}, so that the tap density is improved and the specific surface area is reduced. However, the decrease in the proportion of the small lithium iron phosphate particles leads to formation of agglomerates of these smaller particles, which reduces the tortuous diffusion paths created by such agglomerates, contributing to the diffusion of Li⁺, and finally enhancing the specific capacity and the capacity retention rate from 0.1C to 5C. As can be seen from Examples 6 and 1, as the value of the V_{b}/V_{f} further increases, the grading effect of lithium iron phosphate decreases, resulting in a decrease in tap density. Moreover, as the proportion of the large lithium iron phosphate particles increases, the BET further decreases, thereby reducing the contact area of the lithium iron phosphate material. Further, the large lithium iron phosphate particles increase the transport path of lithium ions, thereby reducing the specific capacity and the capacity retention rate from 0.1C to 5C.

The lithium iron phosphate materials in Examples 1, 8 and 9 only differ in the D_{b}/D_{f}. As the value of the D_{b}/D_{f} increases, the tap density of the lithium iron phosphate material gradually increases, the BET presents a trend of first increasing and then decreasing, and the specific discharge capacity and the capacity retention rate from 0.1C to 5C also present a trend of first increasing and then decreasing. Specifically, as can be seen from Examples 1 and 9, the increase of the value of the D_{b}/D_{f} indicates that lithium iron phosphate has better grading effect and increasing tap density. Since the decreasing particle size of the small lithium iron phosphate particles has a great impact on the increase of BET of lithium iron phosphate, the lithium iron phosphate material has increasing overall BET, increasing specific capacity, and increasing capacity retention rate from 0.1C to 5C. As can be seen from Examples 8 and 1, as the value of the D_{b}/D_{f} further increases, since the increasing particle size of the large lithium iron phosphate particles has a great impact on the decrease of BET of lithium iron phosphate, the overall BET of the lithium iron phosphate material decreases, leading to a reduction in both specific capacity and capacity retention from 0.1C to 5C.

The increase or decrease of the span has an impact on the tap density, BET, specific capacity, and capacity retention rate from 0.1C to 5C of the lithium iron phosphate material. However, this impact depends not only on the particle sizes of Dv10, Dv50, and Dv90, but also on the relative amounts of particles in the corresponding size fractions. As can be seen from Examples 10-11 and 1 of the present disclosure, the lithium iron phosphate materials in these examples only differ in the span. As the span increases, both the tap density and the BET present a trend of first increasing and then decreasing, and the specific capacity and the capacity retention rate from 0.1C to 5C also present a trend of first increasing and then decreasing.

## Claims

1. A lithium iron phosphate material, wherein the lithium iron phosphate material has a bimodal distribution in a particle size distribution curve, and the particle size distribution curve sequentially comprises a first peak and a second peak along a positive direction of an abscissa, wherein particle sizes represented by the first peak and the second peak are denoted as D_{f} and D_{b}, respectively, in µm; and volume percentages are denoted as V_{f} and V_{b}, respectively,
the lithium iron phosphate material satisfies 1.10 ≤ σ_{b}/σ_{f} ≤ 5.00, wherein σ_{b} is a sample standard deviation of circularity C of large lithium iron phosphate particles, σ_{f} is a sample standard deviation of circularity C of small lithium iron phosphate particles, the circularity C=(4×π×A)/P², wherein A is a projected area of the lithium iron phosphate particles, and P is a perimeter of the projected area;
the large lithium iron phosphate particles are lithium iron phosphate particles with a projected area larger than or equal to Sₘₐₓ=1/4×π×D_{b}², and the small lithium iron phosphate particles are lithium iron phosphate particles with a projected area smaller than or equal to Sₘᵢₙ=1/4×π×D_{f}².

2. The lithium iron phosphate material according to claim 1, wherein the lithium iron phosphate material satisfies at least one of the following features 1 and 2:
feature 1: the σ_{b} satisfies 0.05 ≤ σ_{b} ≤ 0.15; or
feature 2: the σ_{f} satisfies 0.02 ≤ σ_{f} ≤ 0.09.

3. The lithium iron phosphate material according to claim 1 or 2, wherein the lithium iron phosphate material satisfies at least one of the following features a-d:
feature a: 0.3 µm ≤ D_{f} ≤ 1.0 µm and 1.2 µm ≤ D_{b} ≤10 µm;
feature b: 3% ≤ V_{f} ≤ 10% and 3% ≤ V_{b} ≤ 10%;
feature c: 0.2 ≤ V_{b}/V_{f} ≤ 2.5; or
feature d: 2.5 ≤ D_{b}/D_{f} ≤ 12.

4. The lithium iron phosphate material according to any one of claims 1 to 3, wherein the lithium iron phosphate material satisfies: $2 \leq \frac{{D}_{b}}{{D}_{f}} / \frac{{V}_{b}}{{V}_{f}} \times span \times \frac{{σ}_{b}}{{σ}_{f}} \leq 70 ;$ wherein span satisfies 1.5 ≤ span ≤ 5, the span is calculated as span =(Dv90-Dv10)/Dv50, and the Dv90, Dv50, and Dv10 are the particle sizes corresponding to cumulative volume percentages of 90%, 50%, and 10% of the lithium iron phosphate material, respectively, all in µm.

5. A method for preparing the lithium iron phosphate material according to any one of claims 1 to 4, comprising steps of:
coating a large-particle-sized iron phosphate seed crystal with polydopamine to obtain a polydopamine-partially-coated large-particle-sized iron phosphate seed crystal;
subjecting the polydopamine-partially-coated large-particle-sized iron phosphate seed crystal to vacuum dehydration to obtain a modified iron phosphate seed crystal;
mixing the modified iron phosphate seed crystal with a small-particle-sized iron phosphate seed crystal, adding an iron salt and a phosphorus source to a resulting mixture to allow precipitation reaction in water, to obtain an iron phosphate material; and
subjecting the iron phosphate material, a lithium source, and a carbon source to mixing and calcining successively, to obtain the lithium iron phosphate material.

6. The preparation method according to claim 5, wherein a method for obtaining the polydopamine-partially-coated large-particle-sized iron phosphate seed crystal comprises the following steps: mixing and dispersing the large-particle-sized iron phosphate seed crystal and a surfactant in a dopamine hydrochloride-containing Tris-HCl buffer solution, stirring for reaction, followed by filtering, washing and drying to obtain the polydopamine-partially-coated large-particle-sized iron phosphate seed crystal.

7. The preparation method according to claim 6, wherein the method for obtaining the polydopamine-partially-coated large-particle-sized iron phosphate seed crystal comprises at least one of the following features i-vi:
feature i: the surfactant is an anionic surfactant with a concentration of 0.1-3 g/L in the Tris-HCl buffer solution;
feature ii: a mass ratio of the large-particle-sized iron phosphate seed crystal to the surfactant is 50:1-5;
feature iii: the large-particle-sized iron phosphate seed crystal has a particle size of 400-1,500 nm;
feature iv: the Tris-HCl buffer solution has a pH valve of 8-8.5;
feature v: the dopamine hydrochloride has a concentration of 0.1-0.3 mg/mL in the Tris-HCl buffer solution; or
feature vi: the stirring for reaction is conducted at a stirring rate of 500-1,000 rpm for 20-30 h.

8. The preparation method according to any one of claims 5 to 7, comprising at least one of the following features A-G:
feature A: the vacuum dehydration is conducted at a temperature of 160-190°C for 1-1.5 h;
feature B: the small-particle-sized iron phosphate seed crystal has a particle size of 200-600 nm;
feature C: a volume ratio of the modified iron phosphate seed crystal to the small-particle-sized iron phosphate seed crystal is 0.9-1.5: 1;
feature D: a ratio of a total volume of the modified iron phosphate seed crystal and the small-particle-sized iron phosphate seed crystal to volume of the water is 1: 4-12;
feature E: the iron salt has a concentration of 0.5-1.2 mol/L in the water;
feature F: a molar ratio of iron element in the iron salt to phosphorus element in the phosphorus source is 1: 1-1.5; or
feature G: the precipitation reaction is conducted at a stirring rate of 350-750 rpm.

9. A cathode sheet, comprising the lithium iron phosphate material according to any one of claims 1 to 4 or the lithium iron phosphate material prepared by the preparation method according to any one of claims 5 to 8.

10. A secondary battery, comprising the cathode sheet according to claim 9.
